Europäisches Patentamt

European Patent Office

Office européen des brevets

(19)

(11) **EP 1 148 699 B1**

(12) **EUROPEAN PATENT SPECIFICATION**

(45) Date of publication and mention
of the grant of the patent:
**22.09.2004 Bulletin 2004/39**

(51) Int Cl.$^7$: **H04M 3/493**, H04M 3/38

(21) Application number: **01114139.7**

(22) Date of filing: **08.07.1986**

(54) **Operations control**

Operationssteuerung

Commande d'opérations

(84) Designated Contracting States:
**DE FR GB NL SE**

(30) Priority: **10.07.1985 US 753299**

(43) Date of publication of application:
**24.10.2001 Bulletin 2001/43**

(62) Document number(s) of the earlier application(s) in
accordance with Art. 76 EPC:
**99101809.4 / 0 917 335**
**93110671.0 / 0 568 114**

(73) Proprietor: **Ronald A. Katz Technology Licensing,
L.P., a California limited partnership
Los Angeles, California 90069 (US)**

(72) Inventor: **Katz, Ronald Alan
Los Angeles, California 90024 (US)**

(74) Representative: **Klunker . Schmitt-Nilson . Hirsch
Winzererstrasse 106
80797 München (DE)**

(56) References cited:
**EP-A- 0 032 410**

- **ASO A: "TRENDS AND APPLICATIONS OF
VOICE OUTPUT DEVICES" JEE JOURNAL OF
ELECTRONIC ENGINEERING, DEMPA
PUBLICATIONS INC. TOKYO, JP, vol. 19, no. 182,
1 February 1982 (1982-02-01), pages 102-107,
XP002062428 ISSN: 0385-4507**

## Description

This invention relates to operations control and is concerned with methods and systems for exercising such control.

The invention in one aspect is concerned especially with methods of operations control of an interface with a telephone communications facility, of a kind in which calls from a multiplicity of terminals of the communications facility are received at the interface, automated voice response to each call is made to the calling terminal prompting the caller to transmit digital-signal data to the interface via the communications facility, digital-signal data transmitted via the communications facility by the caller in response to the prompting is received at the interface for processing, and a test is carried out to check whether the caller is entitled within a limitation to access : operations of the interface.

A method of this specified kind, and a corresponding system, are already known from US-A-4 071 698 in the context of a marketing operation conducted over the public telephone network. In such operation, calling customers individually request that a selected audio recording, which may itself be one of the products marketed or may simply be representative of a service or other product offered, is played to him/her over the telephone line for demonstration or other presentational purposes, before an order is placed by the customer. When the customer calls, a check is made to determine whether this is the first time he/she has called and if not whether the rate at which he/she has made calls without placing an order exceeds a limit established by a 'free-loader' algorithm. If the call is the first call, or the rate-limit has not been exceeded in relation to time or purchases, the caller is prompted by automated voice messages that lead him/her step by step through successive stages of data entry in automatic, computer processing of the call.

In the stage-by-stage processing of the call, the caller is instructed to key in through operation of the push-buttons of his/her telephone instrument, data concerning his/her account, and then, once this account information has been verified, is invited to key in a code identifying the selection of product or service for which audio demonstration or other presentation is required. Following the presentation, the customer receives automated instructions for keying in data for ordering the relevant product or service. The data keyed in by the customer is recorded in order to maintain inventory records and for the purpose of determining trends, and also for maintaining an historical record in relation to each customer from which, for example, the customer's preferences can be determined.

It is an object of the present invention to provide a method and system of the said specified kind, that offers improvement over what is known from US-A-4 071 698 for, in particular, fuller data-analysis of calls.

According to one aspect of the present invention, a method of operations control of an interface with a telephone communications facility, is characterised in that the test checks whether the caller is entitled to access operations of the interface based on entitlement key-codes allocated to products and/or services associated with those operations, that limits on use of the operations by the individual callers are specified by the entitlement key-codes, and that the digital-signal data received from the individual callers include entitlement key-codes that are checked in the test to qualify the callers for entitlement to access the respective operations.

Other aspects and features of the present invention are set out in the Claims.

The present invention offers advantages over what is known from US-A-4 071 698, and also over methods and systems of telephone marketing using automated voice response as used for hotel or hospital room reservation and railway, air or other ticket reservation, as known from a paper 'Trends and Applications of Voice Output Devices' by Satoshi Aso, J.E.E. Journal of Electronic Engineering, Volume 19, No 182, February 1982, Tokyo, Japan, pages 102-107. This paper also describes a telephone betting method and system in which automated voice response leads a user through a sequence of operations of the push-button keys of his/her telephone to place a bet. Furthermore, a method and system for entering a stake once per week in a lottery, using the public telephone network and involving storage of data concerning each caller and entry of data by him/her in accordance with automated voice instructions, is described in EP-A-0032410.

An example of a system, and its method of operation, in accordance with the present invention, will now be described, with reference to the accompanying drawings, in which:

FIGURE 1 is a block diagram of a system in accordance with the present invention;

FIGURE 2 is a fragmentary diagrammatic representation of a storage cell of the system of FIGURE 1; and

FIGURE 3 is a flow diagram of an operational format of the system of FIGURE 1.

It is to be understood that the specific structural and functional details of the system and method to be described, are merely representative of one of many possible ways in which the present invention may be implemented.

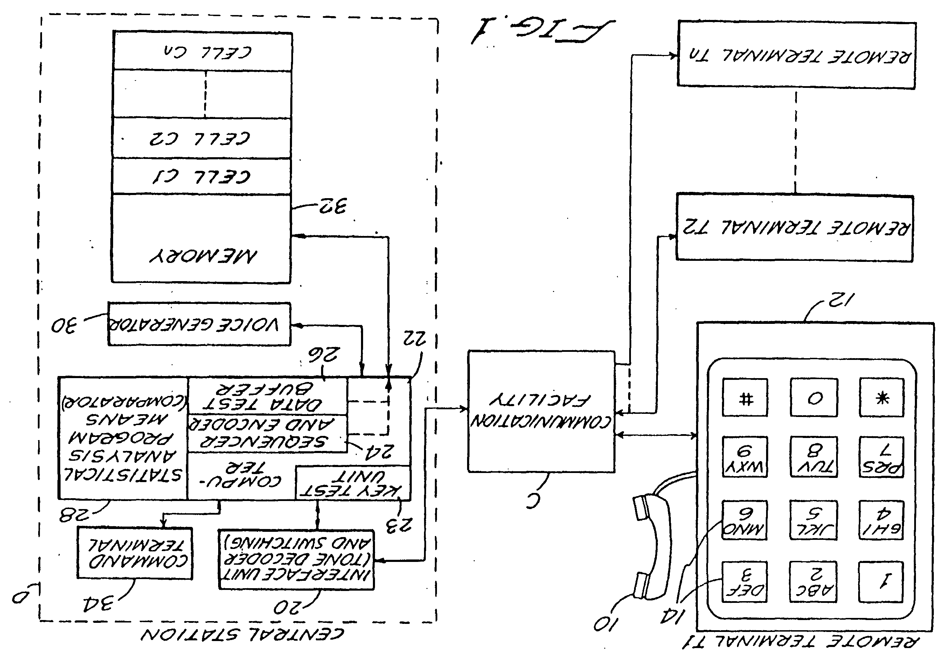

Referring initially to FIGURE 1, a series of remote terminals T1 through Tn are represented. The terminals are generally similar, and accordingly, only the terminal T1 is illustrated in detail. In the disclosed embodiment, the remote terminals T1 through Tn comprise telephone terminals coupled to a communication facility C which may take the form of a comprehensive telephone system for interconnecting any associated terminals. The communication facility C is also coupled to a data development station D in accordance herewith, which is illustrated in some detail.

Generally in accordance with the present development, individual callers use the individual telephone stations T1 through Tn to interface the data development station D through the communication facility C. Also in accordance herewith, the data of individual callers is collected and correlated in the data station D for processing in accordance with external data. As a consequence, a select subset of the callers are isolated and specifically identified.

Several polling (in the sense, for example, of registering responses to a survey invitation) or informing operations can be performed utilizing systems in accordance herewith. For example, a poll of the public might be taken with regard to locating the specific purchasers of a defective and dangerous product.

The public might in this context be polled with the objective of locating persons susceptible to a specific ailment of disease. In a less serious vein, but one of particular commercial significance, the system also might be employed in various public communication game formats or, where legal and deemed in the public welfare, public lotteries.

Considering the system of FIGURE 1 in somewhat greater detail, it is to be understood that the communication facility C has multiplexing capability for individually coupling the terminals T1-Tn to the central station C on request. In the illustrative form of the system, the communication facility C comprises a public telephone facility and the individual terminals T1-Tn take various forms of existing telephone instruments. In that regard, the telephone terminal T1 is represented in some detail to include a hand piece 10 (microphone and earphone) and a panel 12 provided with a rectangular array of push buttons 14.

In accordance with conventional telephone designations, alphabetic and numeric designations are provided on the buttons 14. For example, several of the buttons 14 carry three letters along with a decimal numeral. More specifically, the button designated with the numeral "2" also carries the letters "A", "B", and "C". In that manner, the buttons 14 encompass the numerals "0-9", two symbols, and the alphabet except for the letters "Q" and "Z". Consequently, the buttons 14 accommodate entry of decimal data along with a wide range of alphabetic data. In that regard, the buttons 14 designated with symbols "*" and "#" as well as the numeral "0" can be used by predetermined assignment to represent the letters "Q" and "Z" or any of a variety of other data or commands. Generally in accordance herewith, the buttons 14 are employed to formulate digital data at the central station D in various formats determined by the current specific use of the system.

Considering the central station D in somewhat greater detail, the communication facility C is coupled to an interface unit 20 which incorporates modems, tone decoders, and switching mechanisms. The interface unit 20 affords couplings to a computer 22 which may take the form of a mini-unit programmed for example in accordance with the functions as set forth below. Generally, the computer 22 performs distinct and separate operations. Specifically, the computer 22 may initially qualify a caller. In that regard, if a select group of callers are to have access to the system, a key test unit 23 qualifies individual callers who present a key number. Subsequently, during a data acquisition phase, the computer 22 receives data from individual stations T1-Tn (through the communication facility C) which data is organized, identified, and stored. Thereafter, during a processing phase the computer 22 processes the stored data applying additional data to isolate a select subset of callers.

Sub-blocks in addition to unit 23 also are illustrated in the block designating the computer 22 so as to represent various internal component operating units. In formulating the data records to be stored, the computer 22 employs logic operations which are performed by a sequencer and encoder 24. During statistical processing operations, the computer 22 utilizes a data test buffer 26 along with a statistical analysis program means 28. Exemplary operations and formats for these elements are treated below.

The computer 22 is connected to a voice generator 30 to selectively provide voice messages through the interface unit 20 and the communication facility C to a currently active remote terminal. Also, the computer 22 is coupled to a memory 32 containing a plurality of individual cells C1-Cn which are employed to register the data from individual callers at the terminals. Thus, during a data accumulation phase, the apparatus at the central station D acquires data in the memory 32 utilizing individual cells C1-Cn for the individual callers. Subsequently, during the statistical processing operation, the computer 22 receives data through a command terminal 34 which is tested with regard to the acquired data in the cells C1-Cn of memory 32 so as to select and identify a subset of the individual callers. Thus, the system is effective for use in statistical polling to selectively identify a particular subset of data associated with a subset of individual callers. In that regard, it is important to positively identify the isolated subset of callers and also to enable those callers to verify their identity. The system of the present invention accommodates those needs.

An appreciation of the philosophical operation of a system in accordance with the present invention may now be enhanced by considering an exemplary operation of the illustrative embodiment of FIGURE 1 to isolate a subset of people who are susceptible to a particular disease or infirmity. The exemplary operation might involve a geographical area, as a large city, in which a particular health problem is somewhat acute. For example, a major population centre in which coronary artery disease is a major problem might be polled.

Accordingly, persons most susceptible to such disease could be identified for corrective measures.

As an alternative example related to health, the system may process the resultant data from test kits. Specifically, test kits might be sold to concerned persons who would use the kit to obtain certain specific health data. For example, a person might purchase a kit containing the apparatus and instructions to perform various non-invasive procedures to obtain data that could indicate a health condition, e.g. pregnancy. The kit containing the apparatus could also include a key number for qualifying the purchaser to access the computer 22. The qualification would be performed by the key test unit 23 which might simply incorporate a look-up table to check off key numbers as they are used or "consumed".

Returning to the example mentioned above of a general polling for a population centre, people of the metropolitan area would be informed of the availability of a service for statistical health analysis. Accordingly, persons interested in their individual statistical situation would be motivated to utilize the service. Specifically, individual callers would use the remote terminals T1-Tn to contact the central station D through the communication facility C and thereby provide personal information which would enable a statistical analysis in relation to existing data so as to isolate and inform those persons statistically most likely to be in need of corrective measures. In such applications, it may be important that the caller's identity be subject to reliable verification. Other applications may present a critical need for positively verifiable identification to the extent that credit-card numbers and/or personal identification numbers may be employed.

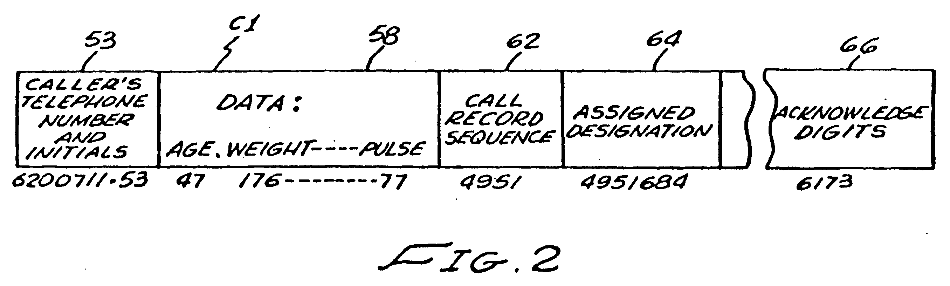

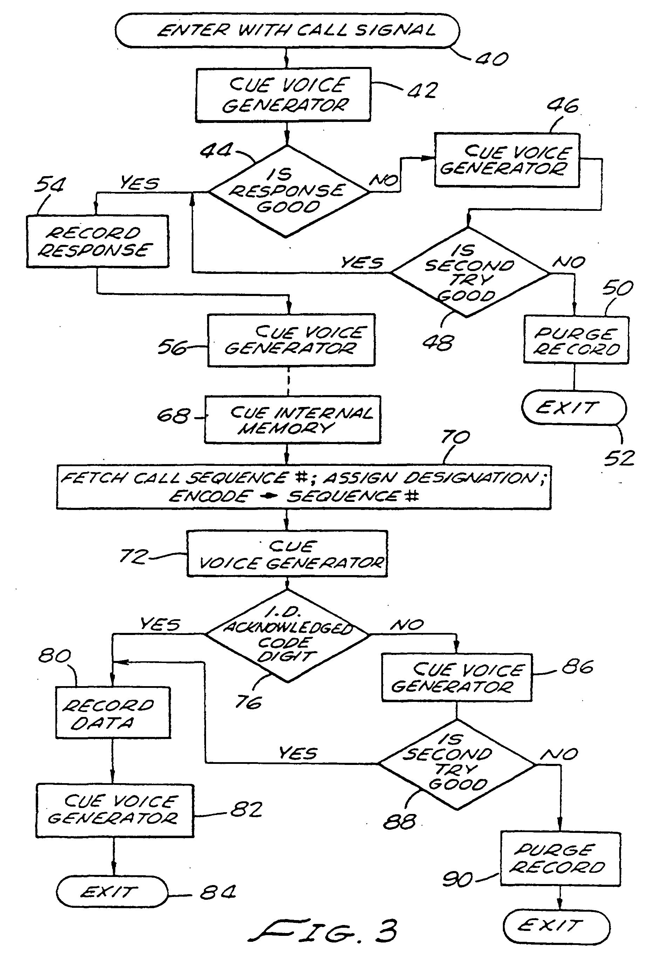

The exemplary operation, with regard to a specific caller, will now be treated referring somewhat concurrently to FIGURES 1, 2, and 3. As indicated above, FIGURE 2 indicates a data storage format and will now be considered with regard to a format in which data is composed in one of the cells C1-Cn of the memory 32. Pursuing the above example in accordance with the assumptions, further assume the existence of a caller at the remote terminal T1 who wishes to pursue health-related information on the basis of statistical analysis. The caller lifts the hand piece 10 and in accordance with conventional techniques actuates the push buttons 14 to establish communication through the facility C with the central station D. Upon receiving the call signal, the interface unit 20 (central station D, FIGURE 1) actuates the computer 22 to cue the voice generator 30. The sequence of operations is represented to be initiated in FIGURE 3 by the "enter" block 40 which is accordingly followed by a "cue voice generator" command block 42. Accordingly, the voice generator 30 (FIGURE 1) formulates speech, a representative form of which might be: "Thank you for participating in the coronary artery disease statistical analysis. Please give us your telephone number by actuating the call buttons on you telephone instrument."

Acting on the instructions, the caller would push the buttons 14 in sequence to indicate his telephone number, i.e. "6200711". The resulting telephone number signals are communicated to the interface unit 20 (FIGURE 1) then applied to the computer 22 for testing as a valid telephone number. The test is indicated by the block 44 (FIGURE 3). If the response is not valid, for example contains an inappropriate number of digits, the operation of block 46 is initiated again cuing the voice generator 30 (FIGURE 1). Accordingly, the voice generator reinstructs the caller, e.g.: "You have not entered a proper telephone number. Please reenter your telephone number by pressing the appropriate call buttons."

The caller is then allotted a predetermined period of time to make a proper entry with the consequence that the system moves to a test operation as indicated by the block 48 (FIGURE 3). Specifically, block 48 poses the query: "Is the second try good?"

If the caller is again unsuccessful, the system purges the record as indicated by the block 50 and the call is terminated as indicated by the block 52. Conversely, if the caller responds with a proper telephone number, the operation sequences to record the response as indicated by the block 54. That is, the caller's telephone is recorded in a specific cell C1-Cn identified with the caller. The format of the cell C1 is indicated in FIGURE 2. The first portion, section 53, contains the caller's telephone number, i.e. "6200711". It is to be noted that, as explained above, if the second attempt to formulate a proper number is successful, as manifest by the block 48 (FIGURE 3), the response is recorded at that stage. In either case, exiting from the block 54 (FIGURE 3) invokes the next operation of again cuing the voice generator as indicated by the block 56.

As an alternative, if a selective-group polling operation is performed, as mentioned above, the caller is qualified by providing the "one-time" key number included in his package. As indicated above, the unit 23 may incorporate a look-up table for proper key numbers. Proper numbers may be coded using any of a wide variety of techniques. As a simple illustrative example, the key may comprise a precise number of digits that always total a particular numerical value.

The key test unit 23 performs the test as an initial qualification. Next, the unit 23 verifies that the key given by a caller has not been consumed by prior use. Thus, the unit 23 may simply incorporate some arithmetic test capability along with a look-up table as well known in the art.

Returning to the detailed example, the process proceeds after the caller is qualified. Specifically, the cue to the voice generator 30 (FIGURE 1) as represented by the block 56 produces a request for further information from the caller. For example, the voice generator might request information by stating: "Please use the telephone buttons to indicate the initials of your first and last names using the asterisk button for the letters Q and Z."

The detailed operation is not represented in FIGURE 3 as it is similar to the operation illustrated by the blocks 42 through 54. However, again, a proper response is registered in the storage cell C1 as illustrated in FIGURE 2 by the number "53" also registered in the first section 53 of the cell.

The cycle of obtaining digital information from the caller next is repeated with respect to substantial specific health data. For example, as illustrated in FIGURE 2, the next section 58 in the cell C1 receives an accumulation of health data, including the caller's age, weight, pulse rate, and so on. Representative digital numbers are illustrated in FIGURE 2.

During the course of telephonic communication, the computer 22 formulates identification data for the caller specifically including: the chronological sequence of the call, the assigned designation of the call, and a set of acknowledgment digits for the call. Such data identification is registered in the assigned cell C1 in accordance with the formate of FIGURE 2 being stored in sections 62, 64, and 66.

It is to be noted that the data may be stored in a coded interrelationship. For example, the acknowledgement digits may be related to the call record sequence. In the illustrative example, the chronological order number of the caller is 4951. The acknowledge digits may be derived from that sequence number. For example, as illustrated, a coded relationship may be established by adding "two" to each of the individual record sequence digits. Considering the example numerically:

| | 4951 |
| | 2222 |
| Adding without carries: | $\overline{6173}$ |

According to the example, the call chronological sequence registered for the caller is 4951 as represented in the section 62 while the acknowledge digits are 6173 as registered in the section 66. Additionally, the computer develops an assigned designation number, e.g. designation "4951684", which is registered in the section 64 and an acknowledge code or digits, e. g. 6173, registered in the section 66. These values are formulated in accordance with conventional number techniques during the data acquisition phase. Specifically, with the exemplary numerals formulated, the operation proceeds.

The computer 22 (FIGURE 1) cues the internal memory. That operation is indicated by the block 68 (FIGURE 3). Thus, the computer 22 fetches the call record sequence number, assigns a designation (if not previously assigned), and encodes the sequence number as the acknowledgement digits (if not previously accomplished). These operations are indicated by the block 70 (FIGURE 3). Next, the computer 22 (FIGURE 1) cues the voice generator as indicated by the block 72 (FIGURE 3) to provide information to the caller. Specifically, for example, the voice generator 30 (FIGURE 1) might state: "This transaction has been designated by the number 4951684, and is further identified by the acknowledgement digits 6173. Please make a record of these numbers as they will be repeated. Specifically, the designation number is 4951684. The acknowledgement digits are 6173. Please acknowledge this transaction by pressing your telephone buttons to indicate the acknowledge digits 6173."

The system then assumes a test mode as indicated by the block 76 (FIGURE 3). If the caller provides the correct acknowledgment digits, the data is confirmed in the record as indicated by the block 80 and registered in the cell C1 (FIGURE 2). Additionally, the voice generator 30 (FIGURE 1) is sequenced as indicated by the block 82 (FIGURE 3) to indicate the close of the communication and that the transaction is terminated as represented by the exit block 84.

In the event that the caller cannot confirm his acknowledgment digits, as indicated by the block 76, a repeat operation is performed as indicated respectively by the blocks 86 and 88. Specifically, the voice generator 30 (FIGURE 1) is cued for a second instructional message. In the event that the second attempt also fails, the data is purged and the call discounted as indicated by block 90. If the second try is successful (test block 88), as indicated by the block 80, the record is perfected as indicated above.

As a result of the likelihood of a large number of calls, as described above, the data cells C1-Cn in the memory 32 (FIGURE 1) are developed with specific information indicative of a statistical sampling of the populace of concern. The data of that statistical sampling may be self-generating of specific conclusions with respect to a subset of individuals, and/or supplemental data may clearly manifest a significant subset. For example, the data may indicate a significant departure from an assumed normal characteristic. Such data, accumulated from the polling, may be considered by logic comparisons in the computer 22 to select the subset of persons who should be isolated.

In addition to the self-generating conclusions available from the received data, the system may involve the introduction of external data. In the physical fitness example, such external data might take the form of national statistical data. In any event, the processing operation usually involves comparison testing which compares caller data from individual cells C1-Cn with test data that is supplied to the statistical analysis program means 28 through the command terminal 34.

As a simple example, health data including age, weight, pulse etc, may be formulated into a composite number reflecting rated values for each of the data elements. Such a composite number may then be placed in the data test buffer 26 for sequential testing against similarly composed numbers formed from the data in the individual cells C1-Cn. Based on such comparative testing, a subset of persons may be identified. Presumably those persons should be informed of their circumstances. However, it is important that identifications be confirmed as accurate. It is in that sense that the assigned designations as registered in the section 64 (FIGURE 2) and the call record sequence, as registered in the block 62, are important. Multiple comparative processing operations may be desirable or necessary to isolate and confirm a subset of significant concern.

In the above example, members of the public were simply invited to use the service. A number of alternatives exist which might well impact on the statistical analysis. For example, callers might be restricted to the purchasers of a specific product as a medical apparatus for measuring blood pressures, heart rates, or so on. In such situations, it will be apparent that the statistical data will be somewhat distorted from an average or normal sampling. Clearly, the computer 22 can be programmed to take into account such considerations.

In that regard, the computer 22 might also verify identification data proffered by a caller. Such data might take the form of a credit-card number or a personal identification number. Various techniques for verification of such numbers using computer techniques are well known and recognized in the prior art. In any event, a wide variety of possibilities, applications, and formats in accordance herewith will be apparent to those skilled in the art wherein data is assembled, stored, identified, processed by testing to isolate a subset or manifest data with sources reliably confirmed. For example, merchandising, polling, selecting, and related operations are practical.

In view of the above explanation of the exemplary system, it will be appreciated that embodiments of the present invention may be employed in many applications to accumulate statistical data, process such data, and define subsets of callers of concern. While certain exemplary operations have been stated herein, and certain detailed structures have been disclosed, the appropriate scope hereof is deemed to be in accordance with the claims as set forth below.

## Claims

1. A method of operations for a data station (D) to which callers from individual terminals (T1-Tn) are interfaced via a telephone system (C), in which generated voice messages are transmitted to the calling terminals (T1-Tn) via the telephone system (C) prompting the respective callers to transmit signal data to the data station (D) via the telephone system (C), and the signal data transmitted in response to the prompting is received by the data station (D) for use in execution of said operations, **characterised in that** for at least some of the calls this signal data includes a key number, and that the data station (D) collects signal data of individual callers and verifies that this key number has not been consumed by prior use, thereby qualifying the caller to access certain operations of the data station (D) during the respective call.

2. A method according to claim 1 wherein the key number is tested to confirm that it is of a proper form.

3. A method according to claim 2 wherein the key number is verified by its coding.

4. A method according to any of claims 1 to 3 wherein verification that the key number has not been consumed involves a look-up table.

5. A method according to claim 4 wherein key numbers are checked off against the look-up table as they are consumed by use.

6. A method according to any one of claims 1 to 5 wherein data for identification of the caller is accumulated at the data station (D).

7. A method according to claim 1 wherein the caller is prompted by voice message to transmit the caller's telephone number to the data station (D).

8. A method according to claim 1 or claim 7 wherein the caller's telephone number is tested for validity at the data station (D).

9. A method according to any one of claims 1 to 8 wherein the data station (D) stores some of the data which is transmitted to it via the telephone system (C) as a result of the call.

10. A method according to claim 9 wherein following the storage of data of the call, a generated voice message is provided to the caller via the telephone system (C) giving information to the caller.

11. A method according to any one of claims 1 to 10 wherein the key number is provided on a product acquired earlier by a caller.

12. A method according to claim 11, wherein the product is acquired by purchase.

## Patentansprüche

1. Betriebsverfahren für eine Datenstation (D), mit der Anrufer von individuellen Endgeräten (T1-Tn) über ein Telefonsystem (C) verbunden sind, wobei erzeugte Sprachnachrichten zu den anrufenden Endgeräten (T1-Tn) über das Telefonsystem (C) gesendet werden, mit denen die jeweiligen Anrufer aufgefordert werden, Signaldaten über das Telefonsystem (C) an die Datenstation (D) zu senden, und die ansprechend auf die Aufforderung gesendeten Datensignale von der Datenstation (D) empfangen werden zwecks Verwendung bei der Ausführung der Operationen, **dadurch gekennzeichnet, dass** für zumindest einige der Anrufe diese Signaldaten eine Schlüsselzahl enthalten, und dass die Datenstation (D) Signaldaten individueller Anrufer sammelt und verifiziert, dass diese Schlüsselzahl noch nicht durch eine frühere Benutzung verbraucht ist, um dadurch den Anrufer für den Zugang zu gewissen Operationen der Datenstation (D) während des betreffenden Anrufs zu qualifizieren.

2. Verfahren nach Anspruch 1, bei dem die Schlüsselzahl darauf geprüft wird, ob sie die richtige Form hat.

3. Verfahren nach Anspruch 2, bei dem die Schlüsselzahl durch ihre Kodierung verifiziert wird.

4. Verfahren nach einem der Ansprüche 1 bis 3, bei dem die Verifizierung, dass die Schlüsselzahl noch nicht verbraucht ist, eine Nachschlagetabelle involviert.

5. Verfahren nach Anspruch 4, bei dem Schlüsselzahlen mit einer Nachschlagetabelle daraufhin abgeglichen werden, ob sie durch Benutzung verbraucht sind.

6. Verfahren nach einem der Ansprüche 1 bis 5, bei dem Daten zum Identifizieren eines Anrufers in der Datenstation (D) angesammelt werden.

7. Verfahren nach Anspruch 1, bei dem der Anrufer durch eine Sprachnachricht aufgefordert wird, die Telefonnummer des Anrufers an die Datenstation (D) zu übermitteln.

8. Verfahren nach Anspruch 1 oder Anspruch 7, bei dem die Telefonnummer des Anrufers bezüglich Gültigkeit in der Datenstation (D) geprüft wird.

9. Verfahren nach einem der Ansprüche 1 bis 3, bei dem die Datenstation (D) einige der Daten speichert, die ihr über das Telefonsystem (C) als Ergebnis des Anrufs übermittelt werden.

10. Verfahren nach Anspruch 9, bei dem im Anschluß an die Speicherung von Daten des Anrufs eine generierte Sprachnachricht über das Telefonsystem (C) an den Anrufer gegeben wird, um dem Anrufer Information zu vermitteln.

11. Verfahren nach einem der Ansprüche 1 bis 10, bei dem die Schlüsselzahl zu einem Produkt gehört, dass bereits früher von einem Anrufer erworben wurde.

12. Verfahren nach Anspruch 11, bei dem das Produkt durch Kauf erworben wird.

**Revendications**

1. Procédé d'opérations pour une station de données (D) à laquelle des appelants de terminaux individuels (T1-Tn) sont raccordés via un système téléphonique (C), dans lequel des messages vocaux générés sont transmis aux terminaux appelants (T1-Tn) via le système téléphonique (C) invitant les appelants respectifs à transmettre des données de signal à la station de données (D) via le système téléphonique (C), et les données de signal transmises en réponse à l'invitation sont reçues par la station de données (D) pour être utilisées lors de l'exécution desdites opérations, **caractérisé en ce que**, pour au moins une partie des appels, ces données de signal comportent un numéro clé, et que la station de données (D) collecte des données de signal d'appelants individuels et vérifie que ce numéro clé n'a pas été consommé par une utilisation antérieure, qualifiant ainsi l'appelant pour accéder à certaines opérations de la station de données (D) pendant l'appel considéré.

2. Procédé selon la revendication 1, dans lequel le numéro clé est testé pour confirmer qu'il est d'une forme correcte.

3. Procédé selon la revendication 2, dans lequel le numéro clé est vérifié par son codage.

4. Procédé selon l'une quelconque des revendications 1 à 3, dans lequel la vérification que le numéro clé n'a pas été consommé implique une table de consultation.

5. Procédé selon la revendication 4, dans lequel les numéros clé sont retirés de la table de consultation lorsqu'ils sont consommés par utilisation.

6. Procédé selon l'une quelconque des revendications 1 à 5, dans lequel des données d'identification de l'appelant sont accumulées dans la station de base (D).

7. Procédé selon la revendication 1, dans lequel l'appelant est invité par message vocal à transmettre le numéro de téléphone d'appelant à la station de base (D).

8. Procédé selon la revendication 1 ou la revendication 7, dans lequel le numéro de téléphone d'appelant est testé pour la validité dans la station de données (D).

9. Procédé selon l'une quelconque des revendications 1 à 8, dans lequel la station de données (D) mémorise une partie des données qui sont transmises à celle-ci via le système téléphonique (C) en réponse à l'appel.

10. Procédé selon la revendication 9, dans lequel après la mémorisation de données de l'appel, un message vocal généré est transmis à l'appelant via le système téléphonique (C) donnant des informations à l'appelant.

11. Procédé selon l'une quelconque des revendications 1 à 10, dans lequel le numéro clé est fourni sur un produit acquis précédemment par un appelant.

12. Procédé selon la revendication 11, dans lequel le produit est acquis par achat.

FIG.1

EP 1 148 699 B1

| CALLER'S TELEPHONE NUMBER AND INITIALS | DATA: AGE, WEIGHT----PULSE | CALL RECORD SEQUENCE | ASSIGNED DESIGNATION | ACKNOWLEDGE DIGITS |
|---|---|---|---|---|
| 6200711·53 | 47 176-------77 | 4951 | 4951684 | 6173 |

FIG. 2

ENTER WITH CALL SIGNAL — 40

CUE VOICE GENERATOR — 42

44 — IS RESPONSE GOOD

YES — 54 RECORD RESPONSE

NO — CUE VOICE GENERATOR 46

IS SECOND TRY GOOD — 48

YES

NO — PURGE RECORD 50

56 — CUE VOICE GENERATOR

68 — CUE INTERNAL MEMORY

70 — FETCH CALL SEQUENCE #; ASSIGN DESIGNATION; ENCODE → SEQUENCE #

EXIT — 52

72 — CUE VOICE GENERATOR

76 — I.D. ACKNOWLEDGED CODE DIGIT

YES — 80 RECORD DATA

NO — CUE VOICE GENERATOR 86

IS SECOND TRY GOOD — 88

YES

NO — PURGE RECORD 90

82 — CUE VOICE GENERATOR

EXIT — 84

EXIT

FIG. 3